# EUROPEAN PATENT APPLICATION

(11) **EP 4 147 857 A1**
(43) Date of publication of application: **15.03.2023**
(21) Application number: 22195054.6
(22) Date of filing: 12.09.2022
(51) Int. Cl.: B29C 64/291, B29C 64/165, B33Y 10/00, B33Y 30/00, B33Y 50/02, B29C 64/393

(54) **METHODS FOR CALIBRATING HEAT SOURCES IN AN APPARATUS FOR THE MANUFACTURE OF 3D OBJECTS**

(30) Priority: 13.09.2021 GB 202112998
(71) Applicant: Stratasys Powder Production Ltd, London SW1H 0BL (GB)
(72) Inventor: DORINI, Gianluca, London, SW1Y 4LB (GB)
(74) Representative: Pitchford, James Edward

(57) **Abstract**

Provided are methods for calibrating a one or more heat sources in an apparatus for the layer by layer manufacture of a 3D object from particulate material, the apparatus comprising at least one heat source and a thermal sensor; the method comprising: the layer cycle steps of: (a) distributing a layer of particulate material over a build bed, the layer providing a build bed surface; (b) heating the build bed surface, comprising a first region, by operating a first heat source at a first power input over a first period of time; (c) measuring a first temperature of the first region using the thermal sensor; (d) depositing a first amount of radiation absorber over the first region within the build bed surface; and/or depositing a first amount of absorption inhibitor over a surrounding area surrounding the first region; (e) heating the first region, and a second region within the surrounding area, by operating the first heat source or a second heat source at a second power input over a second period of time; and (f) measuring with the thermal sensor a second temperature of the first region and a third temperature of the second region, wherein the first amount of absorption modifier causes the second temperature to be higher than the third temperature; repeating the layer cycle two or more times, each layer using a respective pair of first and second input powers in respective steps (b) and (d) of heating, wherein each said pair is different to the preceding pairs; and determining from the measured first, second and third temperatures measured for each layer an adjusted first and/or second input power so as to calibrate the performance of the first, or the first and second, heat source with respect to one another; and applying the adjusted first and second input powers to steps (b) and (e) of heating for a subsequent layer cycle to process a further layer. In an alternative method, the step (d) further comprises depositing a second amount of absorption modifier over the second region, and where instead the surrounding area surrounds the first and second regions.

## Description

### FIELD OF THE INVENTION

The present disclosure relates to methods for calibrating one or more heat sources in an apparatus for the layer-by-layer manufacture of three-dimensional (3D) objects from particulate material. A controller and an apparatus for applying the methods are also disclosed as well as a resulting test part.

### BACKGROUND

In applications for forming 3D objects from particulate material, such as so-called "print and sinter" and laser sintering processes, an object is formed layer-by-layer from particulate material that is spread in successive layers across a build bed. Each successive layer of the object is melted or partially melted to fuse or sinter the particulate material over defined regions and in so doing to consolidate it, in order to form a cross section of the 3D object. In the context of particulate polymer materials for example, the process of melting achieves fusion of particles. Such a process requires accurate temperature control over the temperature of the surface that is being processed to achieve high-quality uniform objects with well-defined properties. Temperature control requires use of a thermal sensor, such as a pyrometer or thermal camera, that detects the temperature of the build bed surface. For reliable process control from build to build or between different apparatus, it is desirable to calibrate the input power to the heat sources that contribute to the thermal control of the layer surface. Such heat sources may be infrared bar heaters moved over the build bed surface to heat the particulate material in different power modes. For example, the build process may comprise a preheat step during which the particulate material reaches a temperature near to but below the melting point, and a fuse step during which the material is heated enough so that it melts. The input power of the one or more heat sources that provide these two heating steps requires calibration against a reference such that the desired temperatures are achieved. This for example ensures that fusing occurs as intended. Furthermore, significant temperature differentials may be prevented to subsist or at least be reduced between fused and unfused areas. In the case where two or more different heat sources, or different modes of the same heat source, are used to heat the particulate material, it is desirable to calibrate the power of the sources with respect to one another or with respect to different modes. This adjusts for variability in heat source performance that otherwise causes uncontrollable differences of heating of the layer surface, which in turn causes poor control over object properties. Known methods use a thermal sensor to calibrate heating effects of one or more heat sources on the build bed surface by measuring the temperature of individual regions heated by operating a respective heat source above them at different powers. It was found that such known techniques are however not adequate and frequently lead to unexpected variation in a subsequent build process. It is an object of the present invention to reduce or eliminate such variation by providing improved calibration techniques.

### SUMMARY

Aspects of the invention are set out in the appended independent claims, while particular embodiments of the invention are set out in the appended dependent claims.

The following disclosure describes, in one aspect, a method for calibrating one or more heat sources in an apparatus for the layer by layer manufacture of a 3D object from particulate material is disclosed, the apparatus comprising at least one heat source and a thermal sensor; the method comprising the layer cycle steps of:
(a) distributing a layer of particulate material over a build bed, the layer providing a build bed surface of the build bed;
(b) heating the build bed surface by operating a first heat source at a first power input over a first period of time, the build bed surface comprising a first region;
(c) measuring a first temperature of the first region using the thermal sensor;
(d) depositing a first amount of absorption modifier in the form of radiation absorber over the first region within the build bed surface; and/or depositing a first amount of absorption modifier in the form of absorption inhibitor over a surrounding area surrounding the first region;
(e) heating the first region, and a second region within the surrounding area, by operating the first heat source or a second heat source at a second power input over a second period of time; and
(f) measuring with the thermal sensor a second temperature of the first region and a third temperature of the second region, wherein the first amount of absorption modifier causes the second temperature to be higher than the third temperature; and
   - repeating the layer cycle two or more times, each layer using a respective pair of first and second input powers in respective steps (b) and (e) of heating, wherein each said pair is different to the preceding pairs; and
   - determining from the measured first, second and third temperatures measured for each layer an adjusted first and/or second input power so as to calibrate the performance of the first, or the first and second, heat source with respect to one another; and
   - applying the adjusted first and second input powers to steps (b) and (e) of heating for a subsequent layer cycle to process a further layer.

In a second aspect, a method for calibrating one or more heat sources in an apparatus for the layer by layer manufacture of a 3D object from particulate material is disclosed, the apparatus comprising at least one heat source and a thermal sensor; the method comprising: the layer cycle steps of:
(a) distributing a layer of particulate material over a build bed, the layer providing a build bed surface of the build bed;
(b) heating the build bed surface by operating a first heat source at a first power input over a first period of time, the build bed surface comprising a first region;
(c) measuring a first temperature of the first region using the thermal sensor;
(d) depositing a first amount of absorption modifier in form of radiation absorber over the first region and a second amount of absorption modifier over a second region; and/or depositing a first amount of absorption modifier in form of absorption inhibitor over a surrounding area surrounding the first region and a second region and depositing a second amount of absorption modifier in form of absorption inhibitor over the second region;
(e) heating the first region and the second region by operating the first heat source or a second heat source at a second power input over a second period of time; and
(f) measuring with the thermal sensor a second temperature, of the first region, and a third temperature of the second region; wherein the first amount and the second amount of absorption modifier causes the second temperature to be higher than the third temperature and the third temperature to be higher than the temperature of the surrounding area after the step (e) of heating; and
   - repeating the layer cycle two or more times, each layer using a respective pair of first and second input powers in respective steps (b) and (e) of heating, wherein each said pair is different to the preceding pairs; and
   - determining from the measured first, second and third temperatures measured for each layer an adjusted first and /or second input power so as to calibrate the performance of the first, or the first and second, heat source with respect to one another; and
   - applying the adjusted first and second input powers to steps (b) and (e) of heating for a subsequent layer cycle to process a further layer.

### BRIEF DESCRIPTION OF THE DRAWINGS

Reference is now directed to the drawings, in which:
Fig. 1A is a schematic cross-section of detail of a side view an apparatus configured to apply the methods of the invention;
Fig. 1B is a schematic plan view of the build bed surface of the apparatus of Fig. 1A;
Fig. 2 is a flow chart of the methods of the invention;
Fig. 3 is schematic illustration of the blocks of the flow chart of Fig. 2;
Fig. 4 provides further detail of the blocks of the flow chart of Fig. 2;
Fig. 5 is a block diagram of a process comprising the methods of the invention, and
Fig. 6 is a block diagram of a third heat source operated during the methods of the invention.

In the drawings, like elements are indicated by like reference numerals throughout.

### DETAILED DESCRIPTION

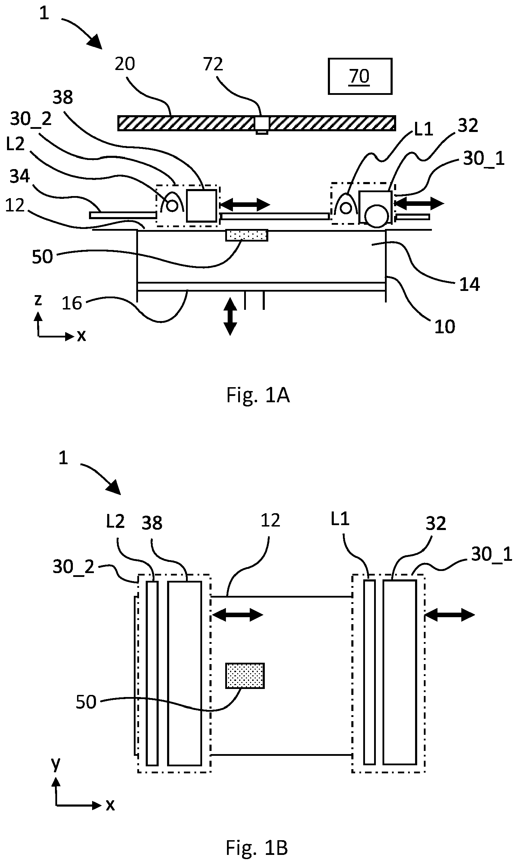

Methods according to the invention for calibrating one or more heat sources in a 3D printing apparatus, an associated apparatus and controller therefor, and a resulting test part, will now be described with reference to Figs. 1A to 6.

Fig. 1A schematically illustrates detail of a cross section of a powder bed fusion type apparatus 1, comprising heat sources to be calibrated, and configured to carry out the methods and their variants. In a typical process for the layer-by-layer formation of a 3D object from particulate material, successive layers of particulate material are distributed, each to form a build bed surface 12, which are then processed to form successive cross-sections of the object. In this context, the reference to the 'build bed surface' is to the surface of the top-most layer of particulate material. In other words, each newly distributed layer forms a new build bed surface 12 that forms the build bed surface 12 of the layer to be processed in that particular layer cycle.

Modules for distributing the particulate material and processing the formed layer are provided on one or more carriages that are moveable across the layer. Accordingly, for illustrative purposes, Fig. 1A shows two carriages 30_1 and 30_2 arranged on one or more rails 34 that allow the carriages to be moved back and forth along the same direction above the build bed 14. The build bed 14 of particulate material is supported by a container having walls 10 and a platform 16. The platform 16 supporting the build bed 14 is arranged to move vertically within the container walls 10 to lower or raise the build bed surface 12; for example by operating a piston located beneath the platform 16. The apparatus further comprises, without specifically showing, a reservoir to supply particulate material to a dosing module that doses an amount of fresh particulate material to be distributed across the build bed, thus forming a new build bed surface 12. In other implementations of the apparatus, the reservoir may supply particulate material to the distribution device. In this illustration, carriage 30_1 comprises a distribution module 32, for example comprising a roller, to distribute a new layer of particulate material over the build bed 14 to form a new build bed surface 12. On a second carriage 30_2, a deposition module 38 is supported for selectively depositing absorption modifier over the build bed surface 12. Module 38 may be, for example, a fluid deposition module, comprising one or more droplet deposition heads, such as printheads, for depositing radiation absorbing fluid over a defined region 50.

A heat source L2 is provided on the carriage 30_2 to heat the region 50 following deposition of the radiation absorbing fluid. The selectivity of preferentially heating the region 50 versus the surrounding area is achieved by providing the heat source L2 with a spectrum of radiation that at least partially overlaps with the absorption spectrum of radiation absorbing fluid but that is not significantly absorbed by the particulate material alone. The radiation-absorbing fluid thus may absorb radiation readily from the first heat source and selectively heat the particulate material it is in thermal contact with (i.e. over the region 50) preferentially over that of the surrounding area. If the combination of absorber amount and power input to first heat source (causing a certain energy input to the region 50) is sufficient, the particulate material of region 50 will, for example, melt/sinter to fuse and form a region 50 of consolidated particulate material. Thus, during a build process of an object, the radiation-absorbing fluid may be deposited over selected portions of the build bed surface 12 so as to define the cross sections of the object over successive layers. During a calibration process, the region 50 may be a section of a test part processed for measurement purposes. During a build process, the region 50 may represent a cross section of an object to be built. The test part may be a single test part in which the different layers may have different visual shades due to changes in the pairs of input powers causing different levels of fusion. In addition, the test part may have different visual shades in the plane of each layer, due to different (first and second) regions having different (first and second) respective amounts of radiation absorber.

In some apparatus, and as exemplified in the apparatus 1 of Figs. 1A and 1B, a further heat source L1 may be arranged to immediately preheat the layer following distribution by the distribution module 32. Fig. 1B shows a plan view of the build bed surface 12 of Fig. 1A comprising the region 50. The carriages 30_1 and 30_2 with their respective modules are spanning the width of the build bed surface 12 (along y). As indicated before, each carriage 30_1, 30_2 is moveable back and forth along the x-axis, which herein is also referred to as the length of the build bed surface 12, the length being perpendicular to the width, however reference to length and width is not intended to indicate relative extent of the two directions but merely to help reference directions of the process.

The two heat sources will in the following be referred to as "first heat source" L1, which is used to heat the newly distributed particulate material, and "second heat source" L2, which is used to heat the region 50 following deposition of absorption modifier. Providing a further moveable first heat source L1 may be an effective way of returning, or preheating, the temperature of the new and much colder layer (compared to the previous, processed layer) back towards a target build bed temperature. The target temperature may be a predefined temperature that is lower than a melting point and higher than a solidification temperature of the particulate material. This may be done in combination with or in addition to operating the stationary overhead heater 20 provided above the build bed surface 12. The first and second heat sources may be elongate infrared bar heaters, and each may perform differently at identical power inputs due to manufacturing variability or changes in performance as a result of ageing. To adequately control the required heating processes provided by the first and second heat sources L1, L2 therefore, it is necessary to align the performance of the heat sources with respect to one another. If adequately controlled, it may be ensured that the region 50 will consolidate as expected during an object build process, and large temperature differentials between fused and unfused areas may be prevented by operating the first heat source L1 at appropriate power inputs throughout the layer cycle, such that warping or curl of the fused regions may be avoided. This provides reliable control over mechanical and visual properties of a finished object. Furthermore, any subsequent calibration routine relying on the two heat sources may be improved in accuracy of its output, such as a subsequent thermal camera calibration routine.

The inventor has discovered improved methods for calibrating a one or more heat sources in an apparatus for the layer by layer manufacture of a 3D object from particulate material, the apparatus comprising at least one heat source and a thermal sensor; wherein a first method comprises: the layer cycle steps of:
- distributing a layer of particulate material over a build bed 14, the layer providing a build bed surface 12 of the build bed 14;
- heating a first region 50_1 by operating the first heat source L1 at a first power input over a first period of time;
- measuring a first temperature T1 of the first region 50_1 using a thermal sensor 72;
- depositing a first amount of absorption modifier over the first region 50_1 when the absorption modifier is radiation absorber; and/or
- depositing a first amount of absorption modifier over a surrounding area surrounding a first region 50_1 when the absorption modifier is in the form of absorption inhibitor;
- heating the first region 50_1 and a second region 50_2 either with the second heat source L2, or in an alternative variant with the first heat source L1, at a second power input over a second period of time, wherein the second region 50_2 is comprised within the surrounding area surrounding the first region 50_1, and
- measuring a second temperature T2 of the first region 50_1 and a third temperature T3 of the second region 50_2 with the thermal sensor 72, wherein the first amount of absorption modifier causes the second temperature to be higher than the third temperature. Thus, the proposed method enables the provision of two different temperatures T2, T3 in the same layer following heating with the second heat source L2, or in the alternative variant with the first heat source L1, at a second power input, and without having to change the power input or speed of the heat sources during the layer cycle. Overall, three temperatures T1, T2, T3 are measured over the same layer cycle after heating with the first and second heat sources L1, L2.

Next, the layer cycle according to the method of the invention is carried out two or more times, each layer cycle using a respective pair of first and second input powers applied to the heat sources L1, L2, wherein each said pair is different to the preceding pairs by at least one of the first and second input powers. From the measured first, second and third temperatures for each layer to which a corresponding pair of input powers was applied, an adjusted input power for at least one of: the first and second heat sources, or the respective steps (b) and (d) of heating when carried out by the first heat source, is determined, so as to calibrate the performance of the first heat source, or of the first and second heat source, at step (b) of heating with respect to step (e) of heating. The adjusted input power(s) may then be applied during the layer cycle of any subsequent process, for example a calibration process for the thermal sensor, or a subsequent build process for an object during a subsequent layer cycle.

In a second method according to the invention, alternatively to the first method, the second region 50_2 may be provided with a second amount of absorption modifier, wherein the surrounding area further surrounds the second region. Where a second amount of absorption modifier is used in addition to the first amount, the temperature measurements of the second region 50_2 may be more accurate, and lead to improved accuracy in determining the adjusted input powers. In this case, the step of depositing comprises depositing either a first amount over the first region 50_1 and a second amount of over a second region 50_2 when the absorption modifier is radiation absorber; and/or, depositing a first amount over a surrounding area surrounding the first region 50_1 and the second region 50_2, and depositing a second amount of absorption modifier over the second region 50_2, when the absorption modifier is absorption inhibitor. The first amount and the second amount of absorption modifier are such that they cause the second temperature T2 to be higher than the third temperature T3, and the third temperature T3 to be higher than the temperature of the surrounding area after the step of heating the first region 50_1 and a second region 50_2 with the second heat source L2, or with the first heat source L1, at the second input power profile. The second amount may thus cause a moderate level of absorption over the second region compared to the first, while the surrounding area is the least absorbing. It is thus not essential that the first region 50_1 is void of inhibitor; instead, the first region may have a third amount of absorption inhibitor deposited over it that is chosen such that the first region still absorbs the highest amount of energy from the second heat source L2. The different amounts of absorption modifier may be achieved in different ways, as will be explained in more detail below. As in the first method, from the measured first, second and third temperatures for each layer to which a corresponding pair of input powers was applied, an adjusted input power for at least one of: the first and second heat sources L1, L2, or the respective steps (b) and (d) of heating when carried out by the first heat source L1, is determined, so as to calibrate the performance of the first heat source L1, or of the first and second heat source L1, L2, at step (b) of heating with respect to step (e) of heating. The adjusted input power(s) may then be applied during the layer cycle of any subsequent process, for example a calibration process for the thermal sensor, or a subsequent build process for an object during a subsequent layer cycle.

The adjusted input power(s) may thus be chosen to narrow a performance difference between the two heat sources and to normalise, or calibrate, their performance with respect to one another. This may be necessary where the two heat sources provide significantly different levels of output power for the same input power. The adjusted input power may for example be determined such that a predetermined temperature difference between the two steps of heating is achieved, for example one of the adjusted power input of the first step of heating may be determined based on the adjusted power input of the second step of heating. Furthermore, the adjusted input power may be such as to limit the duty cycle to the heat sources to below a predefined maximum, and the other. The predetermined temperature difference may be obtained from experimental results for the mechanical and/or aesthetic properties of test objects, for example.For each method, the adjusted first and/or second input powers may be applied to the respective steps of heating for a subsequent layer cycle, so as to operate the first heat source (or the first and second heat source) at calibrated input powers. The input power referred to herein may also be referred to as "input power profile" to indicate a power level applied along at least one dimension of the build bed surface 12, for example in direction of movement of the first and/or second heat source. The input power profile may be a constant input power profile, or an input power profile that varies along the direction of movement, i.e. with distance over the build bed surface 12. The radiation of the first and second heat sources L1, L2 may preferably be infrared radiation, preferably comprising near infrared radiation, and the absorption modifier in general terms may be arranged to cause each region 50_n to heat up more than the surrounding area. An infrared radiation absorber, or absorber, may be carbon black. An absorption inhibitor, or inhibitor, may be water acting as a coolant, or a reflector of the radiation of the second or first heat source L2, L1. However, other wavelength spectra may be suitable in combination with respective absorption modifiers and particulate materials. In some examples, both types of absorption modifier may be provided to achieve the desired selectivity and degree of absorption of radiation from the second heat source L2 by the first and second regions.

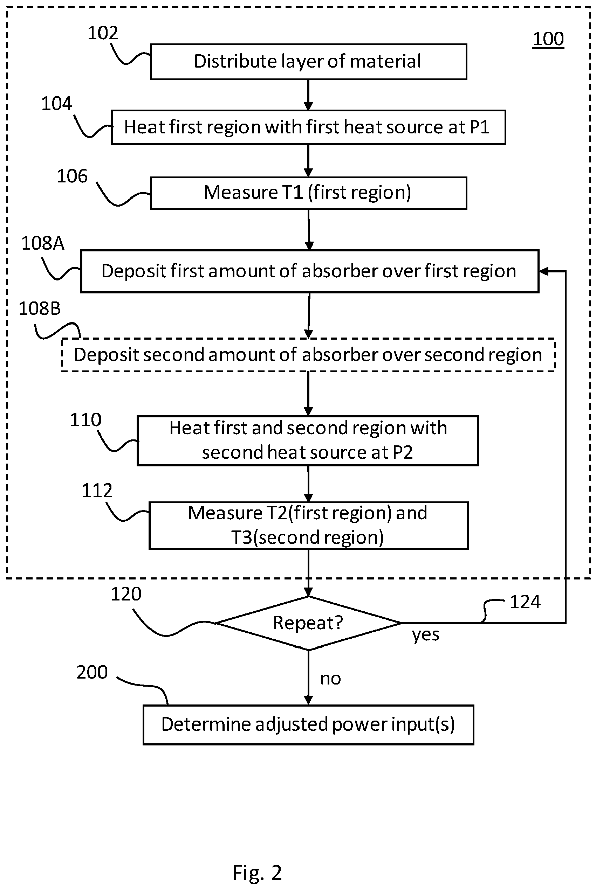

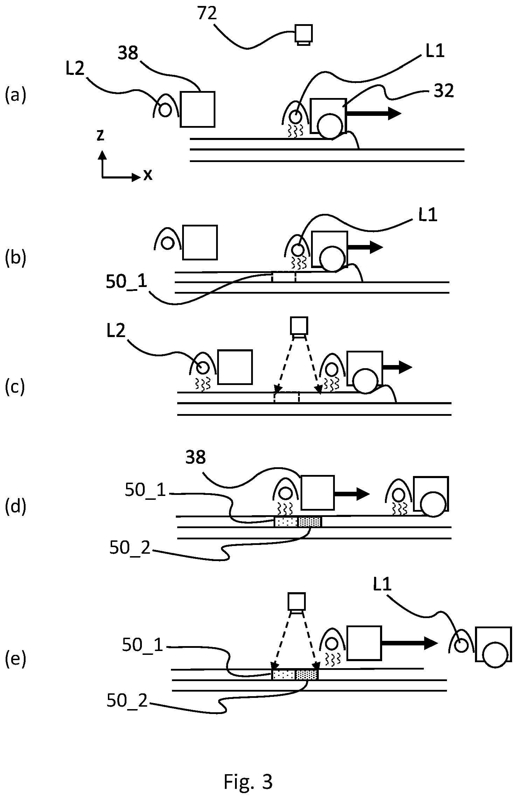

In the following, the methods are described with reference to the preferred method comprising a second amount of absorption modifier deposited over the second region 50_2. However alternative variants may easily be envisaged for which only the first amount is deposited over the first region 50_1 (or over the surrounding area surrounding the first region 50_1, in the case of inhibitor). The further features of the variants described herein apply equally to either method. The method is further illustrated in Figs. 2 and 3 with respect to radiation absorber, however the skilled person would readily be able to adapt the variants disclosed herein with respect to inhibitor, or a combination of absorber and inhibitor.

Fig. 2 is a flow chart of the layer cycle 100, and Fig. 3(a) to 3(e) is a schematic illustration of the blocks of Fig. 2, and which may be implemented by using the apparatus 1 as shown in Figs. 1A and 1B. For each layer cycle, the following steps are carried out:
At block 102, a new layer of particulate material is distributed by distribution module 32 (in the form of a roller, in this example) to form the new build bed surface 12, and at block 104 the build bed surface 12 comprising the first region 50_1 is heated with the first heat source L1. These blocks correspond to Figs. 3(a) and 3(b). It can be seen that the first heat source L1 may immediately heat the distributed layer by following immediately behind the distribution module 32 (with respect to the process direction of the steps, along x) and being operated at the first power input P1 throughout the traverse across the build bed surface 12. This may be achieved by mounting the first heat source L1 immediately behind the roller of Fig. 1A on the first carriage 30_1. The first period of time over which the first region 50_1 is heated by the first heat source L1 is determined by the speed profile of the first heat source. Alternatively, at least the first region 50_1, and optionally the second region 50_2, may be heated by operating the first heat source L1 only while it passes the respective first and second regions.

At block 106, the thermal sensor 72 is used to measure the first temperature T1 of the first region 50_1 following heating at block 104, as illustrated in Fig. 3(c).

At block 108A, the first amount of absorber is deposited over the first region 50_1. Preferably, also a second amount of absorber is deposited over the second region 50_2, following which, at block 110, the first and second regions 50_1, and 50_2 are heated by the second heat source L2 while it is operated at a second input power P2. Where the second amount of absorber (or generally, absorption modifier) is deposited, the surrounding area surrounds both the first and second regions. Fig. 3(d) illustrates this by moving the droplet deposition module 38 followed by the second heat source L2 over the build bed surface 12 along the process direction x. This may be achieved by mounting the second heat source L2 immediately behind the deposition module 38 of Fig. 1A on the second carriage 30_2. The second period of time over which the first and second regions 50_1, 50_2 are heated by the second heat source L2 is determined by the speed profile of the second heat source L2. Similarly, as for the first heat source L1, in an alternative variant, the first and second region 50_1, 50_2 may be heated by operating the second heat source L2 only while it passes over the respective first and second region 50_1, 50_2.

Finally, at block 112, and as illustrated in Fig. 3(e), the second temperature T2 of the first region 50_1 and the third temperature T3 of the second region 50_2 are measured by the thermal sensor following heating by the second heat source L2.

As Figs. 3(b) to 3(e) illustrate by way of a preferred example of the layer cycle, the first and second heat sources L1, L2 may be operated at their respective powers P1, P2 for the entire duration of their traverse of the build bed surface 12.

Furthermore, each layer may comprise a plurality of sublayers, wherein each sublayer is processed according to the same layer cycle steps for that layer. A respective average temperature is determined for the first, second and third temperature T1, T2, T3 from one or more of the plurality of sublayers. Over, for example, the first few sublayers of a calibration routine layer cycle, thermal stability may be achieved and consequently any measurements for these first few sublayers may be discarded or ignored, and for the remaining sublayers, a respective average temperature is determined for that layer. In such a case, the adjusted input power for at least one of the first and second heat sources L1, L2 is determined from the respective average first, second and third temperatures T1, T2, T3.

### Power, pairs of power inputs.

The heating effect by each of the first and second heat sources L1, L2 is determined by factors including the input power to each heat source. Throughout the layer cycle of the first layer of the calibration method, the first heat source L1 is operated at a power P1_1 and the second heat source L2 is operated at a power P2_1. These conditions remain the same for any sublayers comprised within that layer. Throughout the layer cycle of the second layer of the calibration method, the first heat source is operated at a power P1_2 and the second heat source is operated at a power P2_2. These conditions again remain the same for any sublayers comprised within that layer. Throughout the layer cycle of the third layer of the calibration method, the first heat source is operated at a power P1_3 and the second heat source is operated at a power P2_3. Thus three pairs of first and second input powers (P1_1, P2_1), (P1_2, P2_2) and (P1_3, P2_3) are applied in turn, wherein each pair differs from another pair by at least one of the power inputs. The first power and the second power may be the same for at least one of the pairs. These conditions also remain the same for any sublayers comprised within that layer. The first heat source L1 may be used as a preheat source in the apparatus 1 for any subsequent build process. In apparatus variants, the first heat source L1 may instead be arranged so as to provide a second heating step following that of the second heat source L2. In other words, the two heat sources L1, L2 may subsequently be required to be operated to provide very different energy outputs, or similar energy outputs. The three pairs of power inputs may thus span input powers for which preheat and fuse modes may be achieved. For example, a fuse mode may be achieved by operating the heat source (for example the second heat source L2) at a high input power, such as 100% duty cycle, and a preheat mode may be achieved by operating the heat source (for example the first heat source L1) at a medium or low input power, such as 70%-50% duty cycle. The three pairs of power inputs may for example be arranged with input power levels (high, high), (medium, high), (low, medium). These power inputs may cause three sets of first, second and third temperatures T1, T2, T3, which allow a determination of an adjustment to one or both of the two heat sources L1, L2.

In some apparatus, the first and second heat sources L1, L2 may be the same, single heat source operated in different 'modes', i.e. a preheat mode and a fuse mode. This might require that the same heat source is calibrated against two different modes of operation, represented by very different power inputs, for example, following the procedure as described. For other variants of the apparatus, further moveable heat sources, such as a further second heat source L2_2 following the second heat source L2, the two heat sources may be treated as a single heat source operated at additional pairs of power inputs, such that for each layer the heat sources are operated at respective set of three power inputs (P1, P2, P3) per layer: the first heat source, during the step of heating the first region 50_1, is operated at power P1 as before, and the first and second heat sources L2, L2_2 are operated during the step of heating the first and second regions 50_1 50_2 at respective power inputs P2, P3. Similarly, where the further heat source is a further first heat source L1_2, for each layer the heat sources are operated at respective set of three power inputs (P1, P2, P3) per layer such that the first heat source L1 and further first heat source L1_2 are operated at powers P1 and P3 during the step of heating the first region 50_1, and the second heat source L2 is operated at power input P2 during the step of heating the first and second regions 50_1, 50_2. In each case, the steps of measuring the first second and third temperature T1, T2, T3 remain the same. The first second and third temperatures T1, T2, T3 measured according to the methods disclosed herein thus allow the determination of an adjustment for the input power to one or both (or any further) of the heat sources that takes into account the heating effect of both first and second (and optionally further) heat sources within the same layer.

### First amount and second amount of absorption modifier

As described above, a preferred method comprises depositing a first and second amount of absorption modifier, such that the temperatures may be measured with improved accuracy. The second and third temperatures T2, T3 are the result of modifying the absorption differentially between the first and second regions, and between the surrounding area within the build bed surface 12 of the same layer. In the methods disclosed herein furthermore, the speed of the heat sources and the input power over the respective heating steps of the same layer cycle need not be altered so as to achieve the three temperatures T1, T2 and T3. Such changes within the same layer cycle are not preferred since they may lead to unknown variation in heating significant enough to compromise determination of the first, second and third temperatures T1, T2, T3, and thus the reliability of the calibrated input powers.

The absorptive properties of the first and second regions 50_1 and 50_2 may be altered by changing the amount of absorption modifier applied from the first to the second region by one or more of the following:
(i) the coverage of the absorption modifier per unit area over each region. The second amount per unit area of absorption modifier may be different to the first amount per unit area of absorption modifier. In the case of radiation absorber, the amount of radiation absorber deposited per unit area over the first region 50_1 may thus be higher than that deposited over the second region 50_2. Preferably the amount deposited per unit area over the first region 50_1 and over the second region 50_2 may be such that it causes a suitable accuracy in temperature measurements. For example, a temperature difference between 5°C-10 °C may be sufficient. This may conveniently be achieved by providing the first and second amounts of absorption modifier in the form of droplets of a fluid, and depositing the first and second amounts of absorption modifier with one or more droplet deposition heads. The coverage may be defined by one or both of the print pattern determining the spacing between drops deposited (as controlled by the printed image pattern and/or by a dither scheme) and/or the volume of each drop deposited at each location on the layer-specific region 50. For each further layer therefore, one or more of the following may be used to alter the coverage of absorption modifier over the layer-specific region 50 at block 110:
   - depositing a different number of drops of fluid: in the case of a radiation absorbing fluid, depositing a higher number of drops per unit area over the first region 50_1 compared to the second region 50_2; in the case of inhibitor fluid, depositing a lower number of drops per unit area over the second region 50_2 compared to the surrounding area, where the volume per drop may be substantially constant. In this way the first region 50_1 absorbs a higher amount of energy from the second heat source L2 than the second region 50_2;
   - depositing drops of fluid of a different volume (in the case of a radiation absorbing fluid, a larger volume of drops per unit area over the first region 50_1; and in the case of inhibitor fluid, a smaller volume of drops per unit area over the second region 50_2 compared to that deposited over the surrounding area).
(ii) The type of absorption modifier. Multiple absorption modifiers (e.g. radiation absorbers) may be provided to the apparatus. The first and second amount may be deposited by a respective droplet deposition head in the form of respective first and second fluids, wherein the second fluid is different from the first fluid, and comprises one or both of a different absorption modifier and a different concentration in weight per volume compared to the first fluid. When in the form of radiation absorber, the first fluid causes the first region 50_1 to heat to a higher temperature than the second region 50_2 as caused by the second fluid, i.e. the measured second temperature T2 is higher than the measured third temperature T3. The first amount of absorber may be provided by a first absorber capable of absorbing a higher level of energy from the second heat source L2 compared to a second absorber deposited to form the second amount. Alternatively, when in the form of absorption inhibitor, the second fluid causes the second region 50_2 to heat to a higher temperature than the surrounding area surrounding the first and second regions, as caused by the first fluid, and to a lower temperature than the first region, i.e. again such that the measured second temperature T2 is higher than the measured third temperature T3.

The absorption modifiers may comprise different colours capable of absorbing or inhibiting a different amount of energy of the radiation spectrum of the second heat source L2. Multiple fluids provided to the apparatus may be deposited in an overlapping multi-fluid pattern to vary the absorption of the energy of the radiation provided by the second heat source L2. The radiation absorber (or absorption modifier) may be deposited in the form of a multi-fluid pattern, wherein the multi-fluid pattern is deposited over the first and second regions 50_1 and 50_2.

In order for the thermal sensor 72 to be able to measure the temperature of the first region 50_1 following heating by the first heat source L1, and to measure the temperature of the first region 50_1 and the second region 50_2 following heating with the second heat source L2, the regions must necessarily be within the field of view of the thermal sensor 72 at the required timing during the layer cycle. From Fig. 1A and Fig. 3 it can be seen that the first heat source L1 may be arranged at a trailing edge of the first carriage 30_1 with respect to the process direction along x, and the second heat source L2 may be arranged at a trailing edge of the second carriage 30_2 with respect to the process direction. The thermal sensor 72 is thus capable of imaging the first region 50_1 after the first heat source L1 has passed and the first and second regions 50_1, 50_2 after the second heat source L2 has passed without obstruction. In other words, the thermal sensor 72 may image the first region 50_1 after a fixed time delay following heating with the first heat source L1.

Furthermore, with reference to Fig. 2, the step of measuring the first temperature T1 at block 106 and the step of measuring the second temperature T2 and the third temperature T3 at block 112 are carried out after a predetermined fixed time delay following the respective steps of heating with the first heat source L1 at block 104 and heating with the second heat source L2 at block 110. Preferably, the predetermined fixed time delay is the same following the respective steps of heating with the first heat source L1 at block 104 and heating with the second heat source L2 at block 110. When the first heat source L1 and the second heat source L2 are arranged on a single carriage, for example by joining carriage 30_1 to carriage 30_2, a gap between the first heat source L1 and the deposition module 38 may be provided such that the first region 50_1 may be viewed by the thermal sensor 72 over a certain period of time following the step of heating with the first heat source L1, and before the droplet deposition module obscures the first region 50_1 as the carriage passes. Similar considerations apply when the order of the carriages is reversed.

In a preferred method, the steps of heating comprise heating the entire build bed surface 12 comprising the layer-specific region 50. This means that the thermal processes are applied across the entirety of the build bed surface 12, for example by operating the first and second heat sources L1, L2 for at least the duration over which they pass over the build bed surface 12. The thermal stability of the layer cycle may further, or instead, be improved when the calibration methods apply any one, or any combination of, and preferably all, of the following, to the layer cycle disclosed herein, and which may further preferably also apply to the layer cycle of a subsequent layer cycle, such as that of a calibration method for the thermal sensor, or to a build process:
- heating each layer at block 104 by passing the first heat source L1 in the first direction over the layer at a first speed profile while operating the first heat source at the first input power profile P1. For example, the first heat source L1 may be mounted to the first carriage 30_1 in Fig. 1A and is operated while the first carriage 30_1 traverses the build bed surface 12.
- heating each layer at block 110 by passing the second heat source L2 (or with the first heat source L1 again) in the first direction over the layer at a second speed profile while operating the second heat source (or the first heat source L1) at the second input power profile P2. For example, the second heat source L2 may be mounted to the second carriage 30_2 in Fig. 1A and is operated while the second carriage 30_2 traverses the build bed surface 12.
- the first speed profile of the first heat source L1 at block 104 may be the same as the second speed profile of the second heat source L2 (or of the first heat source L1) at block 110, such that the first period of time of heating at block 104 and the second period of time of heating at block 110 are the same.
- the first speed profile and the second speed profile may be substantially constant speed profiles over the build bed surface 12, for example the one or more carriages may move at a substantially constant, non-variable speed over the build bed surface 12.
- the steps of distributing each layer at block 102 and of passing the first and the second heat source L1, L2 over the first and second regions 50_1, 50 2 at blocks 104 and 110 may be carried out in the same direction; optionally also the step of depositing radiation absorber at block 108A (and optionally at block 108B) is carried out by moving the deposition module 38 in that same direction.

It may be desirable for the layer cycle of the calibration methods to closely resemble that of a subsequent calibration or build process. For example, it may be preferable that significant thermal events of the layer cycle are substantially, or at least predominantly, the same for both the calibration and the build process. In preferred variants of the method, respective time periods between the initiation of two steps, and preferably between each step and the previous step, for each layer cycle remains the same for each corresponding step in each successive layer cycle. A preferred variant may for example comprise initiating the step at block 102 of distributing each further layer after a first time interval following initiating the step at block 110 of heating each layer; and initiating the step at block 110 of heating the first and second regions with the second heat source L2 after a second time interval from the step at block 102 of distributing the layer; preferably wherein the respective first and the second time interval is the same for each layer. This means that the return movements of the heat sources, distribution module and the deposition module are preferably also time controlled and remain the same for each layer.

Furthermore, for each layer, the layer cycle may comprise initiating the step at block 110 of heating each layer with the second heat source L2 after a third time interval from initiating the step at block 104 of heating with the first heat source L1. Additionally, or instead, the layer cycle may comprise initiating the step at block 104 of heating each layer with the first heat source L1 after a further time interval from initiating the step at block 102 of distributing each layer. Still further, the respective first, second, third and/or further time interval may be the same for each layer such that the duration of time of each layer cycle is substantially constant throughout the calibration method. Optionally, the step of depositing absorption modifier over the plurality of regions 50_n for each layer at block 108A/108B (typically carried out synchronously and/or in a single step) may be initiated after a fourth time interval following initiating the step of heating with the first heat source at block 104, wherein the fourth time interval is the same for each layer. However, this step may be considered, in most processes, a less significant thermal event of the layer cycle.

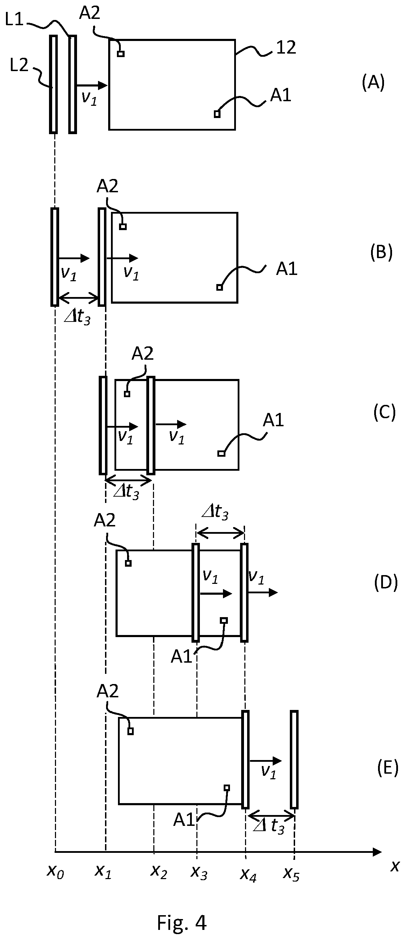

A preferred layer cycle according to the above is further illustrated in Fig. 4, which is a simplified schematic illustration of two main thermal events along the process direction that may be applied using the two-carriage layout of Fig. 1A and Fig. 3. For simplicity, only the first heat source L1 and the second heat source L2 are shown, representing two significant thermal events of heating separated by a time interval, which represents the above-described third time interval Δt₃. The direction of traverse of the heat sources L1, L2 is along the first direction, indicated along x. Two locations A1 and A2 are indicated on the build bed surface 12, A2 towards the near end of the build bed surface 12 with respect to the left of the build bed surface 12, and A1 to the far end of the build bed surface 12 with respect to the near end.

In Fig. 4A, the first and second heat sources L1, L2 are shown in a starting position ready to start the layer cycle.

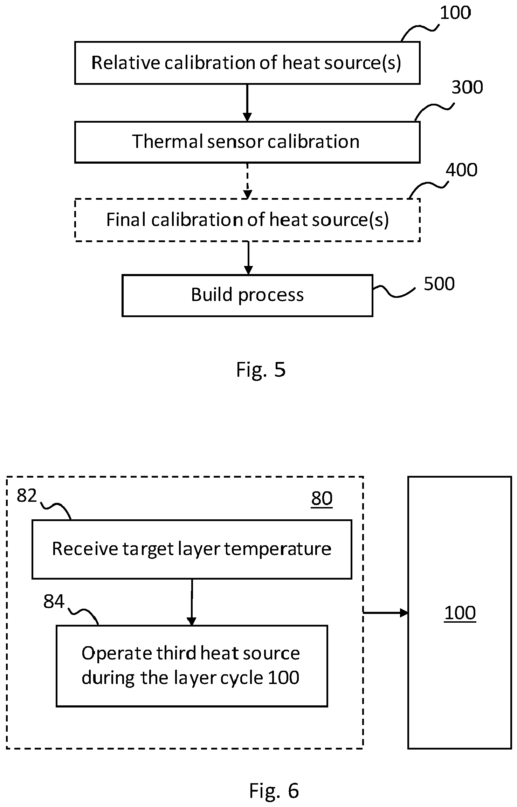

The first heat source L1 (in analogy to Fig. 1A, the first carriage 30_1) starts to traverse the build bed surface 12 at a constant speed v1=const to carry out the step of heating at block 104 of Fig. 2. Ahead of the first heat source L1, in analogy to Fig. 1A, the distribution module 32 moves at the same speed v1 to distribute the layer, the layer forming the build bed surface 12, so as to be heated by the first heat source L1 after the further time interval indicated above (not shown in Fig. 6). The further time interval is determined by the speed v1 and the distance between the distribution module 32 and the first heat source L1 on the first carriage 30_1.

In Fig. 4B, after the third time interval Δt₃, which may be relatively longer than the further time interval, the second heat source L2, from its position x0, starts to follow the first heat source L1 along the first direction at the constant speed v1 (and in analogy to Fig. 1, the second carriage 30_2 starts to follow the first carriage 30_1) to start the heating step of block 110 of Fig. 2. In analogy to Fig. 1A, ahead of the second heat source L2, the deposition module 38 moves at the same speed v1 to deposit radiation absorber over the regions 50_n after the fourth time interval (not shown in Fig. 4) following heating with the first heat source L1. The fourth time interval according to the carriage arrangement of Fig. 1A depends on the third time interval Δt₃, the speed v1 and the distance between the deposition module 38 and the second heat source L2 on the second carriage 30_2.

In Figs. 4C and 4D, the first heat source L1 and the second heat source L2 are illustrated in different positions during their traverse of the build bed surface 12. In Fig. 4C, the first heat source L1 is in position x2 and has passed location A2, and the second heat source L2 at position x1 is just reaching the near edge of the build bed surface 12. The distance between the two heat sources remains the same since both move at the same speed v1, and thus the third time interval Δt₃ remains constant as the two heat sources L1, L2 traverse the build bed surface 12 separated by a fixed distance.

In Fig. 4D, the first heat source L1 is at position x4 and has now also passed location A1, and the second heat source L2, at position x3, has passed location A2. Preferably, the first and second heat sources L1, L2 are operated continuously during their movement over the build bed surface 12. Thus the velocities and input powers applied to the heat sources and the distribution module relate at least to the duration over which the respective heat source and the powder distributor are moved over the build bed surface.

In Fig. 4E, the first heat source L1 has reached position x5 at the end of its traverse and stops. It may be turned off once it passes the far end of the build bed surface 12. At this time in the layer cycle, the second heat source L2 has reached position x4 at the far end of the build bed surface 12 and may be turned off. Both heat sources L1, L2 next return to the starting position at a return speed that may be faster than speed v1. The return speed, or speeds, and the distance of traverse of the first and second carriages to the starting position determine the length of the first time interval between the steps of heating with the second heat source L2 at block 110 and distributing a fresh layer at block 104. The second time interval is defined by the distance between the distribution module and the second heat source L2. In this example, the first time interval may be shorter than the second time interval where the return speed is much faster than speed v1. Preferably, the first time interval is also a fixed time interval applied in the same way for each layer cycle.

From these illustrations it can be seen that location A2 experiences the event of heating with the second heat source L2 after a fixed third time interval Δt₃ of heating with the first heat source L1. Location A1 near the far end of the build bed surface 12 also experiences the event of heating with the second heat source L2 after a fixed third time interval Δt₃ of heating with the first heat source L1. The second time interval and the fourth time interval are fixed as long as the speed v1 is constant, since these time intervals are determined by the respective distance between the distribution module and the first heat source L1, or between the deposition module and the second heat source, and speed v1. In this way, the duration of time of the layer cycle may be substantially the same for each layer. It has been found that this provides for an improved stable thermal cycle and for a more reliable build process when these layer cycle conditions are equally applied to the calibration process. In this way, each location on the build bed surface 12 experiences the same layer cycle steps after the same respective time intervals and for the same respective durations, providing a stable and consistent layer cycle. The same considerations apply for any location of the first and second regions and for an object cross section during a subsequent build process.

The adjusted input power profiles may be determined based on a predefined temperature difference to be achieved between the measured temperatures of a region preheated at a first adjusted power input P1' at a block 104 following distribution, and next heated at a second adjusted input power profile P2' at a block 110 following deposition, of for example radiation absorber. Such as condition contributes to the shape of the desired thermal cycle for example. Furthermore, the adjusted input power profiles P1', P2' may be determined by limiting them to a below a threshold input power that is below the maximum input to the first (and/or second) heat source L1 (L1, L2).

### Third heat source considerations and effect on calibration process

The apparatus 1 may comprise a third heat source 20 arranged stationary above the build bed surface 12, such as the overhead heater 20 in Fig. 1A. During the layer cycle of the calibration methods disclosed, one or more further temperature measurements may be made by the thermal sensor of the temperature of or within the build bed surface 12. In response to the one or more further measurements of or within the build bed surface 12 and with respect to a predefined target layer temperature T(target), the third heat source 20 may be operated so as to maintain the temperature of some or preferably of at least a majority of the build bed surface 12 at or near the target layer temperature T(target), wherein the target layer temperature T(target) is lower than the melting temperature of the particulate material, and typically higher than the solidification temperature of the particulate material. The target layer temperature T(target) may for example be 10-20°C below the melting point of the particulate material so as to keep temperature differentials between fused and unfused areas as low as possible. This may prevent warping or curl of the fused areas. The overhead heater 20 may comprise an array of individually addressable heater elements configured to provide individual, or zonal, thermal compensation over corresponding regions on the build bed 14. In variants, and depending on the type of heat source and mode of operation, it may be preferable to operate the third heat source 20 continuously throughout the duration of time of the layer cycle. This may mean that the third heat source 20 is operated throughout each step of the layer cycle, and for the duration of the calibration method. Continuous operation may comprise operating each heating element of the third heat source 20 at respective constant or variable duty cycles.

Figure 6 illustrates a variant of the layer cycle 100 further comprising heating 80 by the third heat source (e.g. overhead heater 20) throughout the layer cycle 100. Heating by the third heat source may be intermittent but is preferably continuous. In response to one or more further measurements of or within the build bed surface 12 as measured by the thermal sensor 72 and with respect to a predefined target layer temperature T(target), which may be received at block 82, the third heat source 20 is operated at block 84 so as to maintain the temperature of some or preferably of at least a majority of the build bed surface 12 at or near the target layer temperature T(target). During a build process, the third heat source 20 may be operated in the same manner, and during which the first heat source L1 may preheat the build bed surface 12, or at least a majority of the build bed surface 12, to a temperature close to but below, or to a temperature of, the target layer temperature T(target), and wherein the third heat source 20 is operated to achieve the target temperature, or to maintain the target layer temperature T(target), within the predefined range. The third heat source 20 is preferably feedback controlled, and operated based on one or more of a plurality of temperature measurements measured over or within the build bed surface 12 during the layer cycle using the thermal sensor 72. These measurements may be made to capture the temperature of the entire build bed surface 12 following a specific step of the layer cycle.

The first and second regions 50_1, 50_2 may be located at any location over the build bed surface 12, for example in the form of two rectangular regions side by side and arranged perpendicular or parallel to the process direction along x. A plurality of first and second regions 50_1, 50_2 may be provided over different locations of the build bed surface 12. After the completion of the calibration method, i.e. after at least three layer cycles, the processed first and second regions form one or more test objects that may be removed and discarded from the completed build after depowdering.

It should be noted that it is not necessary to immediately proceed from one layer of the layer cycle described herein to the next layer of the calibration method. In addition, a number of unprocessed, blank layers may be distributed without the steps of, for example, depositing absorption modifier and heating with the second heat source L2, such that one or more intermediate layer cycles are applied that are different to the layer cycle of the disclosed calibration method.

The methods and their variants as described may be carried out in part or fully by a controller 70 of the apparatus 1. The controller 70 may for example be configured to control any one or more of the power inputs P1, P2 to the first and second heat sources L1, L2, and to the third heat source 20, the movement of the carriages 30_1, 30 2, the various time intervals between the initiation of the layer cycle steps, and to apply the adjusted input power profiles of the first and/or second heat source L1, L2 during a subsequent process, such as a calibration process for the thermal sensor 72 and/or a build process for a 3D object. A possible sequence of processes is illustrated the flow chart of Fig. 5. For example, the adjusted input power of the first and/or second heat source determined in the method at block 100 may be applied to the heat sources during a subsequent calibration process for the thermal sensor 72 at block 300. During the process 300, the heat sources L1, L2 may be used to progressively heat a region of the build bed surface 12 over a number of layer cycles until the region starts to melt. Based on temperature measurements of the region by the thermal sensor 72, a set point for the temperature scale of the thermal sensor may be determined with respect to the melting temperature of the particulate material. In this way, the process conditions of the steps of heating with the second heat source L2 so as to melt the particulate material during a subsequent build process 500 may be defined with respect to the set point at which melting of the material is expected. It was found that in the absence of applying one of the methods described herein, such a calibration process 300 of the thermal sensor 72 may fail or be less accurate when applying uncalibrated power inputs to the first and second heat sources L1, L2. Optionally, a final calibration sequence of the first and second heat source may be carried out at block 400 so as to determine the respective power input adjustments relative to the calibrated measurement scale of the thermal sensor 72, before the final adjustment values are applied to the subsequent build process at block 500 and the calibrated thermal sensor is used for feedback control of the third heat source (overhead heater 20). The controller 70 may further control all or any one of the further calibration processes at blocks 300 and 400 and the build process at block 500.

## Claims

1. A method for calibrating one or more heat sources in an apparatus for the layer by layer manufacture of a 3D object from particulate material, the apparatus comprising at least one heat source (L1) and a thermal sensor (72); the method comprising:
a layer cycle (100) having steps of:
(a) distributing a layer of particulate material over a build bed, the layer providing a build bed surface (12) of the build bed;
(b) heating the build bed surface (12) by operating a first heat source (L1) at a first power input (PI) over a first period of time, the build bed surface (12) comprising a first region (50_1);
(c) measuring a first temperature (T1) of the first region (50_1) using the thermal sensor (72);
(d) depositing a first amount of absorption modifier in the form of radiation absorber over the first region (50_1); and/or depositing a first amount of absorption modifier in the form of absorption inhibitor over a surrounding area surrounding the first region (50_1);
(e) heating the first region (50_1), and a second region (50_2) within the surrounding area, by operating the first heat source (L1) or a second heat source (L2) at a second power input (P2) over a second period of time; and
(f) measuring with the thermal sensor (72) a second temperature (T2) of the first region (50_1) and a third temperature (T3) of the second region (50_2), wherein the first amount of absorption modifier causes the second temperature (T2) to be higher than the third temperature (T3); and
- repeating the layer cycle (100) two or more times, each layer using a respective pair of first and second input powers (P1, P2) in respective steps (b) and (e) of heating, wherein each said pair is different to the preceding pairs; and
- determining from the measured first, second and third temperatures (T1, T2, T3) measured for each layer an adjusted first and/or second input power (P1', P2'), so as to calibrate the performance of the first heat source, or of the first and second heat source, at step (b) of heating with respect to step (e) of heating; and
- applying the adjusted first and second input powers (P1', P2') to steps (b) and (e) of heating for a subsequent layer cycle (100) to process a further layer.

2. A method for calibrating one or more heat sources in an apparatus for the layer by layer manufacture of a 3D object from particulate material, the apparatus comprising at least one heat source (L1) and a thermal sensor (72); the method comprising:
a layer cycle (100) having the steps of:
(a) distributing a layer of particulate material over a build bed, the layer providing a build bed surface (12) of the build bed;
(b) heating the build bed surface (12) by operating a first heat source (L1) at a first power input (P1) over a first period of time, the build bed surface (12) comprising a first region (50_1);
(c) measuring a first temperature (T1) of the first region (50_1) using the thermal sensor (72);
(d) depositing a first amount of absorption modifier in form of radiation absorber over the first region (50_1) and a second amount of absorption modifier over a second region (50_2); and/or depositing a first amount of absorption modifier in form of absorption inhibitor over a surrounding area surrounding the first region (50_1) and a second region (50_2) and depositing a second amount of absorption modifier in form of absorption inhibitor over the second region (50_2);
(e) heating the first region (50_1) and the second region (50_2) by operating the first heat source (L1) or a second heat source (L2) at a second power input (P2) over a second period of time; and
(f) measuring with the thermal sensor (72) a second temperature (T2) of the first region (50_1), and a third temperature (T3) of the second region (50_2); wherein the first amount and the second amount of absorption modifier causes the second temperature (T2) to be higher than the third temperature (T3) and the third temperature (T3) to be higher than the temperature of the surrounding area after the step (e) of heating; and
- repeating the layer cycle (100) two or more times, each layer using a respective pair of first and second input powers (P1, P2) in respective steps (b) and (e) of heating, wherein each said pair is different to the preceding pairs; and
- determining from the measured first, second and third temperatures (T1, T2, T3) for each pair of input powers an adjusted first and/or second input power (P1', P2'), so as to calibrate the performance of the first heat source, or of the first and second heat source, at step (b) of heating with respect to step (e) of heating; and
- applying the adjusted first and second input powers (P1', P2') to steps (b) and (e) of heating for a subsequent layer cycle to process a further layer.

3. The method of claim 1 or claim 2, wherein the step (e) of heating is carried by passing the first heat source (L1) over the build bed surface (12) at a first speed profile while operating the first heat source (L1) at the first power input (P1), wherein the first period of time is determined by the first speed profile, and wherein the step (e) of heating is carried by the second heat source (L2), by passing the second heat source (L2) over the build bed surface (12) at a second speed profile while operating the second heat source (L2) at the second power input, wherein the second period of time is determined by the second speed profile; and wherein one or more of:
- the first speed profile is the same as the second speed profile such that the first period of time and the second period of time are substantially the same;
- the first and second speed profile is a constant speed profile;
- the first power input (P1) is constant during the step (b) of heating;
- the second power input (P2) is constant during the step (e) of heating; and
- the steps (a) of distributing each layer, (b) of heating by passing the first heat source (L1), and the step (e) of passing the second heat source (L2) over the build bed surface (L2), are carried out in the same direction.

4. The method of any preceding claim, further comprising:
- initiating the step (a) of distributing a further layer after a first time interval from initiating the step (e) of heating each layer;
- initiating the step (e) of heating each layer after a second time interval from initiating the step (a) of distributing the layer;
wherein the respective first and second time interval is the same for each layer, and such that the duration of each layer cycle (100) is constant.

5. The method of any preceding claim, further comprising initiating the step (b) of heating after a further time interval from initiating the step (a) of distributing the layer, wherein the further time interval is the same for each layer.

6. The method of claim 1, wherein the step (d) comprises depositing the first and second amounts of absorption modifier in the form of droplets of a fluid using one or more droplet deposition heads, by one or more of:
- depositing a different number of droplets of fluid per unit area, wherein when the absorption modifier is radiation absorber, depositing a higher number of drops per unit area over the first region (50_1) compared to the second region (50_2); and when the absorption modifier is absorption inhibitor, depositing a lower number of drops per unit area over the second region (50 2) compared to the surrounding area;
- depositing droplets of fluid of a different volume per unit area, wherein when the absorption modifier is radiation absorber, depositing a larger volume of drops per unit area over the first region (50_1) compared to the second region (50_2); and when the absorption modifier is absorption inhibitor, depositing a smaller volume of drops per unit area over the second region (50 2) compared to that deposited over the surrounding area; and
- depositing the first and second amounts from respective first and second fluids by a respective droplet deposition head, wherein the second fluid is different from the first fluid, and comprises one or both of a different absorption modifier and a different concentration in weight per volume compared to the first fluid.

7. The method of any preceding claim, wherein the absorption modifier is a radiation absorber, and wherein the first amount of radiation absorber per unit area deposited over the first region (50_1) is higher than the second amount of radiation absorber per unit area deposited over the second region (50_2).

8. The method of any preceding claim, further comprising operating a stationary heat source (20) arranged above the build bed surface (12) over the duration of time of the layer cycle so as to maintain the temperature of the surrounding area at or near a target layer temperature (T(target)), wherein the target layer temperature (T(target)) is lower than a melting temperature of the particulate material.

9. The method of claim 8, wherein the stationary heat source (20) is operated continuously for the duration of the layer cycle.

10. The method of claim 8 or claim 9, wherein the operation of the stationary heat source (20) is controlled based on one or more further temperature measurements measured within the build bed surface (12), using the thermal sensor (72), during the layer cycle (100).

11. The method of any preceding claim, wherein each layer comprises a plurality of sublayers, wherein each sublayer is processed according to the same layer cycle steps for that layer; and wherein a respective average temperature is determined for the first, second and third temperature (T1, T2, T3) from one or more of the plurality of sublayers.

12. The method of any preceding claim, wherein the step (b) and the step (e) of heating further comprise heating substantially all of the build bed surface (12).

13. The method of any preceding claim, wherein between adjacent layer cycles (100), one or more further layers are processed having a different layer cycle.

14. The method of any preceding claim, further comprising determining the adjusted first and second input power (P1', P2') based on a predetermined temperature difference to be achieved between the step (b) of heating following distribution of a layer and the step (e) of heating following deposition of absorption modifier.

15. The method of any preceding claim further comprising carrying out the step (c) of measuring the first region (50_1) after a fixed time delay following the step (b) of heating; and carrying out the step (f) of measuring the first and second region (50_2) following the step (e) of heating after the fixed time delay.
